# EUROPEAN PATENT SPECIFICATION

(11) **EP 1 744 989 B1**
(45) Date of publication and mention of the grant of the patent: **08.04.2009**
(21) Application number: 05740370.1
(22) Date of filing: 06.05.2005
(51) Int. Cl.: C01B 39/02, C01B 39/14, C01B 39/22, D21H 17/68, C11D 3/12

(54) **STABILISED ALUMINOSILICATE SLURRIES**
STABILISIERTE ALUMINOSILICATSUSPENSIONEN
SUSPENSIONS STABILISEES D'ALUMINOSILICATE

(30) Priority: 13.05.2004 GB 0410697
(43) Date of publication of application: 24.01.2007
(73) Proprietor: INEOS Silicas Limited, Warrington, Cheshire, WA5 1AB (GB)
(72) Inventor: STEBBING, Simon Richard, Padgate Warrington Cheshire WA2 OWL (GB); ELLISON, Stephen George, Warrington, Cheshire WA5 4LX (GB); TOFT, Alexis John, Warrington Cheshire WA4 2SZ (GB)
(74) Representative: Instone, Terry
(86) International application number: PCT/GB2005/001728
(87) International publication number: WO 2005/110920

(56) References cited:
- WO-A-20/04040061
- US-A- 4 405 483
- US-A- 4 622 166
- US-A- 5 206 195
- DATABASE WPI Section Ch, Week 198628 Derwent Publications Ltd., London, GB; Class F09, AN 1986-178224 XP002333900 & JP 61 097499 A (ASAHI GLASS CO LTD) 15 May 1986 (1986-05-15)

## Description

This invention relates to aqueous slurries of crystalline aluminosilicates and in particular to crystalline aluminosilicate slurries having controlled rheological properties.

Crystalline aluminosilicates, or zeolites, have found use as fillers in such applications as the manufacture of paper. For such use, it is convenient to transport the zeolite in bulk in the form of an aqueous slurry. Particularly useful aqueous zeolite slurries having a relatively low pH value and containing a multivalent salt in addition to the zeolite are described in PCT application published as WO 01/94512. These slurries are stable and do not settle on standing but, because they have a lightly gelled structure, they can sometimes be difficult to fully discharge fully from a vessel.

An object of this invention is to provide a modified version of such a slurry having a structure which is resistant to settling but is readily capable of being discharged from a vessel.

According to the invention, an aqueous slurry comprises
(a) a crystalline aluminosilicate represented by the empirical formula

   M_{2/n}O·Al₂O₃·xSiO₂·yH₂O

   wherein M represents a first metal moiety, said first metal having a valency of n, x is the molar ratio of silica to alumina and y indicates the molar ratio of water to alumina,
(b) a mineral or organic acid, and
(c) particulate silica, wherein
the silica has a BET surface area greater than 500 m²/g and a pore volume, as measured by nitrogen manometry of less than 2.1 cm³/g.

The above form of empirical formula is used for simplicity in expressing the molar ratios of the components, but it can be seen that the ratio of Si atoms to Al atoms in this formula is equal to x/2 and the ratio of water molecules to Al atoms is equal to y/2.

The first metal M can be any metal capable of forming a crystalline aluminosilicate structure having the above empirical formula. Preferably, M is an alkali metal and the preferred alkali metal is sodium.
The crystalline aluminosilicates used in the invention are usually known as zeolites and can have the structure of any of the known zeolites. The structure and characteristics of many zeolites are described in the standard work "Zeolite Molecular Sieves" by Donald W. Breck, published by Robert E. Krieger Publishing Company. Usually, the value of x in the above empirical formula is in the range 1.5 to 10. The value of y, which represents the amount of water contained in the voids of the zeolite, can vary widely. In anhydrous material y = 0 and, in fully hydrated zeolites, y is typically up to 5.

Zeolites useful in this invention may be based on naturally-occurring or synthetic aluminosilicates and the preferred forms of zeolite have the structure known as zeolite P, zeolite X or zeolite A. Particularly preferred forms of zeolite are those disclosed in EP-A-0 384 070, EP-A-0 565 364, EP-A-0 697 010, EP-A-0 742 780, WO-A-96/14270, WO-A-96/34828 and WO-A- 97/06102. The zeolite P described in EP-A-0 384 070 has the empirical formula given above in which M represents an alkali metal and x has a value up to 2.66, preferably in the range 1.8 to 2.66, and has a structure which is particularly useful in the present invention.

Slurries useful in the paper industry preferably have an approximately neutral pH. Particularly useful slurries of this invention contain an amount of the mineral or organic acid which is sufficient to produce a slurry having a pH in the range 6 to 9, preferably in the range 7 to 9.

The particle size of the crystalline aluminosilicates used in the slurries of this invention is adjusted to suit the intended use. Typically, the volume average particle size will be greater than 0.1 µm and, usually, less than 20 µm. More preferably, the crystalline aluminosilicates will have a volume average particle size in the range 0.5 to 10 µm. For use as a filler for papers, the crystalline aluminosilicate preferably has a volume average particle size in the range 1 to 5 µm.

Various methods of assessing particle size are known and all give slightly different results. In the present invention, a size distribution is obtained by light scattering from particles dispersed by ultrasound in demineralised water using a Malvern Mastersizer^{®}. The volume average particle size is the average particle size at 50 per cent cumulative volume as determined from the distribution.

The amount of crystalline aluminosilicate, expressed as dry weight of aluminosilicate present in the slurry is usually above 20 per cent by weight and often above 30 per cent by weight. The upper practical limit on the amount of aluminosilicate in the slurry will depend upon the viscosity of the slurry, which is likely to be too high for use in many applications when more than 65 per cent dry weight of aluminosilicate is present. Preferably, the amount of crystalline aluminosilicate, expressed as dry weight of aluminosilicate present in the slurry, is in the range 43 to 60 per cent by weight, more preferably 43 to 55 per cent by weight, most preferably 43 to 52 per cent by weight. For the purposes of this invention dry aluminosilicate is considered to be aluminosilicate which has been heated at 105° C to constant weight.

Examples of suitable mineral acids include sulphuric acid, hydrochloric acid and nitric acid. An example of a suitable organic acid is acetic acid.

The slurry contains silica having a BET surface area greater than 500 m²/g. Preferably the silica has a BET surface area greater than 550 m²/g, more preferably greater than 600 m²/g. Usually the surface area is less than 1200 m²/g.

The silica has a pore volume as measured by nitrogen manometry of less than 2.1 cm³/g. Preferably, the pore volume is less than 1.2 cm³/g, more preferably the pore volume is less than 0.5 cm³/g.

Preferably, the silica is silica gel or a precipitated silica.

The silica preferably has a volume average particle size in the range 0.5 to 30 µm, as measured by Malvern Mastersizer^{®}. More preferably, the volume average particle size of the silica is in the range 2 to 15 µm.

The silica is preferably present in the slurry in an amount in the range 0.2 to 40 per cent by weight with respect to the dry weight of crystalline aluminosilicate. More preferably, the amount of silica present is in the range 0.5 to 15 per cent by weight with respect to dry weight of crystalline aluminosilicate and frequently, the amount of silica used is in the range 0.2 to 5.0 per cent by weight with respect to dry weight of crystalline aluminosilicate.

The crystalline aluminosilicate used in the invention can be prepared by a conventional process. For example, a zeolite of type A can be prepared by mixing together sodium aluminate and sodium silicate at a temperature within the range of ambient temperature up to boiling point to form a gel, ageing the gel with stirring at a temperature usually in the range 70 to 95° C, separating the crystalline sodium aluminosilicate thus formed, washing, generally at a pH in the range 10 to 12.5, and drying. Zeolite of type P can be prepared by a similar process but zeolite type P formation is induced by the addition of type P seeds to the mixture of sodium aluminate and sodium silicate.

According to another aspect of the invention there is provided the use, in the manufacture of paper, of an aqueous slurry comprising
(a) a crystalline aluminosilicate represented by the empirical formula

   M_{2/n}O·Al₂O₃·xSiO₂·yH₂O

   wherein M represents a first metal moiety, said first metal having a valency of n, x is the molar ratio of silica to alumina and y indicates the molar ratio of water to alumina,
(b) a mineral or organic acid, and
(c) particulate silica with a BET surface area greater than 500 m²/g and a pore volume, as measured by nitrogen manometry of less than 2.1 cm³/g.

The slurry of the invention can be prepared in a number of ways. The crystalline aluminosilicate, mineral or organic acid and water can be mixed in any order. Therefore, according to yet another aspect of the invention there is provided a method of making an aqueous slurry comprising mixing
(a) a crystalline aluminosilicate represented by the empirical formula

   M_{2/n}O·Al₂O₃·xSiO₂·yH₂O

   wherein M represents a first metal moiety, said first metal having a valency of n, x is the molar ratio of silica to alumina and y indicates the molar ratio of water to alumina,
(b) a mineral or organic acid,
(c) particulate silica with a BET surface area greater than 500 m²/g and a pore volume, as measured by nitrogen nanometry of less than 2.1 cm³/g, and
(d) water
together to produce a slurry. A preferred method, however, comprises forming a precursor slurry containing the acid and the crystalline aluminosilicate and subsequently adding the silica.

The following tests have been used in this invention.

### BET Surface Area and Pore Volume

Surface area of the silicas were measured using standard nitrogen adsorption methods of Brunauer, Emmett and Teller (BET) using a multi-point method with an ASAP 2400 apparatus supplied by Micromeritics of USA. The method is consistent with the paper by S. Brunauer, P.H. Emmett and E. Teller, J. Am. Chem. Soc., 60, 309 (1938). The pore volume was determined by a single point method as described in the operation manual for the ASAP 2400 apparatus. Samples are outgassed under vacuum at 270° C for 1 hour before measurement at about -196° C.

### Volume average particle size

The volume average particle size of the silica is determined using a Malvern Mastersizer^{®} model S, with a 300 RF lens and MS17 sample presentation unit. This instrument, made by Malvern Instruments, Malvern, Worcestershire uses the principle of Fraunhofer diffraction, utilising a low power He/Ne laser. Before measurement the sample is dispersed ultrasonically at 25 W ultrasound power in demineralised water for 5 minutes to form an aqueous suspension. The Malvern Mastersizer^{®} measures the volume particle size distribution of the silica. The volume average particle size (d₅₀) or 50 percentile is easily obtained from the data generated by the instrument. Other percentiles, such as the 90 percentile (d₉₀), are readily obtained.

The invention is illustrated by the following non-limiting examples.

### EXAMPLE

Three slurries were prepared with the compositions given in Table 1 below.

**TABLE 1**

| **Sample** | **A** | **B** | **C** |
|---|---|---|---|
| Demineralised Water / wt. % | 47.8 | 49.3 | 48.6 |
| Al₂(SO₄)₃.14 H₂O / wt % | 1.5 | 0 | 0 |
| Zeolite A24 (water content 7.03% by drying at 105° C) / wt. % | 50 | 50 | 50 |
| Silica / wt. % | 0.7 | 0 | 0.7 |
| Sulphuric acid (100%) / wt.% | 0 | 0.7 | 0.7 |
| Sample size/g | 1000 | 200 | 250 |
| pH | 7.64 | 8.12 | 8.05 |
| Dry solids (loss at 105) / wt.% | | 46.6 | 48.6 |
| Brookfield viscosity at 20 rpm/cps | 3850-(spindle 4) | 3700 (spindle 5) | 955-(spindle 3) |
| Mettler viscosity at 20 sec-1 / Pas | 0.819 | 0.609 | 0.284 |

| | | | |
|---|---|---|---|
| The amounts given above are parts by weight. | | | |

Zeolite A24 is a P type zeolite sold by INEOS Silicas Limited under the trade mark Doucil A24. It had a volume average particle size as measured by Malvern Mastersizer^{®} of 1.5 µm.
The silica was a silica gel sold by INEOS Silicas Limited under the Trade Name Sorbosil AC30. It had a volume average particle size of 7.9 µm, a pore volume to nitrogen of 0.39 cm³g⁻¹ and BET surface area of 725 m²g⁻¹.

Sulphuric acid was received at 40 weight per cent and diluted with demineralised water to 10 weight per cent before being added to the mixtures. The amount of acid added is expressed at 100 weight per cent in Table 1.

The rheological properties of the slurries were determined immediately after the slurries were prepared using a Mettler Toledo RM 180 Rheomat rheometer, at 22 ± 1° C, with a Mooney cup and bob geometry. The samples were shaken by hand prior to measurement but were not sheared vigorously. The rheometer programme consisted of shearing the sample at a set shear rate for 30 seconds, after which a shear stress measurement was taken at that shear rate. Measurements were taken at 10, 20, 30, 40, 60, 100, 200, 350 and 500 s⁻¹. The Brookfield viscosity measurements were also carried out at 22 ± 1° C, with the viscosity being recorded after 1 minute of shearing at 20 rpm. The spindle chosen for each sample is indicated in Table 1.

## Claims

1. An aqueous slurry comprising
(a) a crystalline aluminosilicate represented by the empirical formula
M_{2/n}O.Al₂O₃.xSiO₂.yH₂O
wherein M represents a first metal moiety, said first metal having a valency of n, x is the molar ratio of silica to alumina and y indicates the molar ratio of water to alumina,
(b) a mineral or organic acid, and
(c) particulate silica with a BET surface area greater than 500 m^{2/}g and a pore volume, as measured by nitrogen manometry of less than 2.1 cm^{3/}g.

2. An aqueous slurry according to claim 1 **characterised in that** M is sodium.

3. An aqueous slurry according to claim 1 or 2 **characterised in that** the crystalline aluminosilicate is a zeolite P, zeolite A or zeolite X.

4. An aqueous slurry according to any one of the preceding claims in which the acid is sulphuric acid.

5. An aqueous slurry according to any one of the preceding claims **characterised in that** it has a pH in the range 6 to 9.

6. An aqueous slurry according to any one of the preceding claims **characterised in that** the crystalline aluminosilicate has a volume average particle size in the range 0.1 to 20 µm.

7. An aqueous slurry according to any one of the preceding claims **characterised in that** the amount of crystalline aluminosilicate present in the slurry is in the range 43 to 60, preferably 43 to 55, most preferably 43 to 52, per cent by weight calculated as dry aluminosilicate.

8. An aqueous slurry according to any preceding claim in which the silica has a BET surface area greater than 550 m^{2/}g, preferably greater than 600 m^{2/}g.

9. An aqueous slurry according to any preceding claim **characterised in that** the silica has a pore volume of less than 1.2 cm^{3/}g, preferably less than 0.5 cm^{3/}g.

10. An aqueous slurry according to any one of the preceding claims **characterised in that** the silica has a volume average particle size in the range 0.5 to 30 µm.

11. An aqueous slurry according to any one of the preceding claims **characterised in that** the amount of silica present in the slurry is in the range 0.2 to 40 per cent by weight with respect to dry weight of crystalline aluminosilicate present.

12. The use, in the manufacture of paper, of an aqueous slurry comprising
(a) a crystalline aluminosilicate represented by the empirical formula
M_{2/n}O.Al₂O₃.xSiO₂.yH₂O
wherein M represents a first metal moiety, said first metal having a valency of n, x is the molar ratio of silica to alumina and y indicates the molar ratio of water to alumina,
(b) a mineral or organic acid, and
(c) particulate silica with a BET surface area greater than 500 m^{2/}g and a pore volume, as measured by nitrogen manometry of less than 2.1cm^{3/}g.

13. A method of making an aqueous slurry comprising mixing
(a) a crystalline aluminosilicate represented by the empirical formula
M_{2/n}O.Al₂O₃.xSiO₂.yH₂O
wherein M represents a first metal moiety, said first metal having a valency of n, x is the molar ratio of silica to alumina and y indicates the molar ratio of water to alumina,
(b) a mineral or organic acid,
(c) particulate silica with a BET surface area greater than 500 m^{2/}g and a pore volume, as measured by nitrogen manometry of less than 2.1cm^{3/}g, and
(d) water
together to produce a slurry.

14. A method according to claim 13 in which the water, aluminosilicate and acid are mixed to form a precursor slurry, and the silica is added to the precursor slurry.

## Patentansprüche

1. Wässrige Aufschlämmung umfassend:
(a) ein kristallines Aluminosilicat, das durch die empirische Formel
M_{2/n}O.Al₂O₃.xSiO₂.yH₂O
dargestellt ist, wobei M einen ersten Metallanteil darstellt, wobei das erste Metall eine Wertigkeit von n aufweist, x das Molverhälmis von Siliciumdioxid zu Aluminiumoxid ist und y das Molverhältnis von Wasser zu Aluminiumoxid anzeigt,
(b) eine Mineral- oder organische Säure und
(c) teilchenförmiges Siliciumdioxid mit einem BET-Oberflächenbereich von mehr als 500 m²/g und einem Porenvolumen, wie durch Stickstoffmanometric gemessen, von weniger als 2,1 cm³/g.

2. Wässrige Aufschlämmung nach Anspruch 1, **dadurch gekennzeichnet, dass** M Natrium ist.

3. Wässrige Aufschlämmung nach Anspruch 1 oder 2, **dadurch gekennzeichnet, dass** das kristallinc Aluminosilicat ein Zeolith P, Zeolith A oder Zeolith X ist.

4. Wässrige Aufschlämmung nach einem der vorhergehenden Ansprüche, wobei die Säure Schwefelsäure ist.

5. Wässrige Aufschlämmung nach einem der vorhergehenden Ansprüche, **dadurch gekennzeichnet, dass** sie einen pH-Wert im Bereich von 6 bis 9 aufweist.

6. Wässrige Aufschlämmung nach einem der vorhergehenden Ansprüche, **dadurch gekennzeichnet, dass** das kristalline Aluminosilicat eine volumendurchschnittliche Teilchengröße im Bereich von 0,1 bis 20 µm aufweist.

7. Wässrige Aufschlämmung nach einem der vorhergehenden Ansprüche, **dadurch gekennzeichnet, dass** die Menge an in der Aufschlämmung vorliegendem kirstallinem Aluminosilicat im Bereich von 43 bis .60, bevorzugt 43 bis 55, am bevorzugtesten 43 bis 52 Gewichtsprozent, als trockenes Aluminosilicat berechnet, liegt.

8. Wässrige Aufschlämmung nach einem der vorhergehenden Ansprüche, wobei das Siliciumdioxid einen BET-Oberflächenbereich von mehr als 550 m²/g, bevorzugt mehr als 600 m²/g, aufweist.

9. Wässrige Aufschlämmung nach einem der vorhergehenden Ansprüche, **dadurch gekennzeichnet, dass** das Siliciumdioxid ein Porenvolumen von weniger als 1,2 cm³/g, bevorzugt weniger als 0,5 cm³/g, aufweist.

10. Wässrige Aufschlämmung nach einem der vorhergehenden Ansprüche, **dadurch gekennzeichnet, dass** das Siliciumdioxid eine volumendurchschnittliche Teilchengröße im Bereich von 0,5 bis 30 µm aufweist.

11. Wässrige Aufschlämmung nach einem der vorhergehenden Ansprüche, **dadurch gekennzeichnet, dass** die Menge an in der Aufschlämmung vorliegendem Siliciumdioxid im Bereich von 0,2 bis 40 Gewichtsprozent, auf das Trockengewicht von vorliegendem kristallinem Aluminosilicat bezogen, liegt.

12. Verwendung bei der Herstellung von Papier einer wässrigen Aufschlämmung umfassend:
(a) ein kristallines Aluminosilicat, das durch die empirische Formel
M_{2/n}O.Al₂O₃.xSiO₂.yH₂O
dargestellt ist, wobei M einen ersten Metallanteil darstellt, wobei das erste Metall eine Wertigkeit von n aufweist, x das Molverhältnis von Siliciumdioxid zu Aluminiumoxid ist und y das Molverhätnis von Wasser zu Aluminiumoxid anzeigt,
(b) eine Mineral- oder organische Säure und
(c) teilchenförmiges Siliciumdioxid mit einem BET-Oberflächenbereich von mehr als 500 m²/g und einem Porenvolumen, wie durch Stickstoffmanometrie gemessen, von weniger als 2,1 cm³/g.

13. Methode zum Herstellen einer wässrigen Aufschlämmung, umfassend das Zusammenmischen
(a) eines kristallines Aluminosilicat, das durch die empirische Formel
M_{2/n}O.Al₂O₃.xSiO₂.yH₂O
dargestellt ist, wobei M einen ersten Metallanteil darstellt, wobei das erste Metall eine Wertigkeit von n aufweist, x das Molverhältnis von Siliciumdioxid zu Aluminiumoxid ist und y das Molvethältnis von Wasser zu Aluminiumoxid anzeigt,
(b) einer Mineral- oder organischen Säure und
(c) von teilchenformigem Siliciumdioxid mit einem BET-Oherflächenbereich von mehr als 500 m²/g und einem Porenvolumen, wie durch Stickstoffmanometrie gemessen, von weniger als 2,1 cm³/g und
(d) Wasser
um eine Aufschlämmung herzustellen.

14. Methode nach Anspruch 13, wobei das Wasser, Aluminosilicat und die Säure gemischt werden, um eine Vorläuferaufschlämmung zu bilden, und das Siliciumdioxid der Vorläuferaufschlämmung hinzugegeben wird.

## Revendications

1. Suspension aqueuse comprenant:
(a) un aluminosilicate cristallin représenté par la formule empirique:
M_{2/n}O.Al₂O₃.xSiO₂.yH₂O
dans laquelle M représente une fraction de premier métal, ledit premier métal possédant une valence de n, x est le rapport molaire de la silice sur l'alumine et y indique le rapport molaire de l'eau sur l'alumine,
(b) un acide minéral ou organique, et
(c) une silice particulaire avec une aire de surface BET supérieure à 500 m²/g et un volume de pores, tel que mesuré par une manométrie à l'azote, inférieur à 2,1 cm³/g.

2. Suspension aqueuse selon la revendication 1, **caractérisée en ce que** M est le sodium.

3. Suspension aqueuse selon la revendication 1 ou 2, **caractérisée en ce que** l'aluminosilicate cristallin est une zéolite P, une zéolite A ou une zéolite X.

4. Suspension aqueuse selon l'une quelconque des revendication précédentes, dans laquelle l'acide est l'acide sulfurique.

5. Suspension aqueuse selon l'une quelconque des revendication précédentes, **caractérisée en ce qu'**elle possède un pH dans l'intervalle de 6 à 9.

6. Suspension aqueuse selon l'une quelconque des revendications précédentes, **caractérisée en ce que** l'aluminosilicate cristallin possède une taille de particules moyenne en volume dans l'intervalle de 0,1 à 20 µm.

7. Suspension aqueuse selon l'une quelconque des revendications précédentes, **caractérisée en ce que** la quantité d'aluminosilicate cristallin présente dans la suspension est dans l'intervalle de 43 à 60, de préférence de 43 à 55, le plus préférablement de 43 à 52 pour cent en poids calculé sous forme d'aluminosilicate sec.

8. Suspension aqueuse selon l'une quelconque des revendications précédentes, dans laquelle la silice possède une aire de surface BET supérieure à 550 m²/g, de préférence supérieure à 600 m²/g.

9. Suspension aqueuse selon l'une quelconque des revendications précédentes, **caractérisée en ce que** la silice possède un volume de pores inférieur à 1,2 cm³/g, de préférence inférieur à 0,5 cm³/g.

10. Suspension aqueuse selon l'une quelconque des revendications précédentes, **caractérisée en ce que** la silice possède une taille de particules moyenne en volume dans l'intervalle de 0,5 à 30 µm.

11. Suspension aqueuse selon l'une quelconque des revendications précédentes, **caractérisée en ce que** la quantité de silice présente dans la suspension est dans l'intervalle de 0,2 à 40 pour-cent en poids par rapport au poids sec de l'aluminosilicate cristallin présent.

12. Utilisation, dans la fabrication d'un papier, d'une suspension aqueuse comprenant:
(a) un aluminosilicate cristallin représenté par la formule empirique:
M_{2/n}O.Al₂O₃.xSiO₂.yH₂O
dans laquelle M représente une fraction de premier métal, ledit premier métal possédant une valence de n. x est le rapport molaire de la silice sur l'alumine et y indique le rapport molaire de l'eau sur l'alumine.
(b) un acide minéral ou organique, et
(c) une silice particulaire avec une aire de surface BET supérieure à 500 m²/g et un volume de pores, tel que mesuré par une manométrie à l'azote, inférieur à 2,1 cm³/g.

13. Procédé pour la fabrication d'une suspension aqueuse comprenant le mélange:
(a) d'un aluminosilicate cristallin représenté par la formule empirique:
M_{2/n}O.Al₂O₃.xSiO₂.yH₂O
dans laquelle M représente une fraction de premier métal, ledit premier métal possédait une valence de n, x est le rapport molaire de la silice sur l'alumine et y indique le rapport molaire de l'eau sur l'alumine,
(b) d'un acide minéral ou organique,
(c) d'une silice particulaire avec une aire de surface BET supérieure à 500 m²/g et un volume de pores, tel que mesuré par une manométrie à l'azote, inférieur à 2,1 cm³/g, et
(d) d'eau
ensemble pour produire une suspension.

14. Procédé selon la revendication 13, dans lequel l'eau, l'aluminosilicate et l'acide sont mélangés pour former un précurseur de suspension et la silice est ajoutée au précurseur de suspension.
